# EUROPEAN PATENT APPLICATION

(11) **EP 3 370 371 A1**
(43) Date of publication of application: **05.09.2018**
(21) Application number: 16869813.2
(22) Date of filing: 30.09.2016
(51) Int. Cl.: H04L 12/26

(54) **SYSTEM AND METHOD FOR IDENTIFYING WIRELESS TERMINAL TYPE IN ROUTER NETWORK BRIDGE MODE**

(30) Priority: 30.11.2015 CN 201510855972
(71) Applicant: Phicomm (Shanghai) Co., Ltd., Shanghai 201616 (CN)
(72) Inventor: ZHANG, Deli, Shanghai 201616 (CN); XIE, Ting, Shanghai 201616 (CN)
(74) Representative: Sun, Yiming
(86) International application number: PCT/CN2016/101396
(87) International publication number: WO 2017/092502

(57) **Abstract**

The present invention provides a wireless terminal type identification method and system in a router bridge networking mode. The method includes: in the router bridge networking mode, capturing all communication data packets forwarded by a router and filtering all the communication data packets to obtain a DHCP request data packet of the communication between a wireless terminal and a DHCP server; parsing the DHCP request data packet to obtain a parsed value; and sending the obtained parsed value and a MAC address of the wireless terminal to a cloud-end server for a wireless terminal type query to obtain the type of the wireless terminal. Parsing parameter values of Option 12, Option 55 and Option 60 in the DHCP request data packet improves accuracy of terminal type identification. When being disconnected from the Internet, the router is capable of identifying the type of the terminal by querying a local database.

## Description

The present application is based upon and claims the priority of Chinese Patent Application No. 201510855972.3 filed on November 30, 2015 and entitled "WIRELESS TERMINAL TYPE IDENTIFICATION METHOD AND SYSTEM IN ROUTER BRIDGE NETWORKING MODE", the entire contents of which are incorporated herein by reference.

### TECHNICAL FIELD

The present invention relates to wireless terminal type identification, and in particular, relates to a wireless terminal type identification method and system in a router bridge networking mode.

### BACKGROUND

Dynamic Host Configuration Protocol (DHCP) is a local area network protocol that runs using a client/server model and based on User Datagram Protocol (UDP). The DHCP protocol manages and assigns IP address in a centralized manner such that hosts in a network environment dynamically acquires IP addresses, gateway addresses, DNS server address and the like information.

In a bridge mode, a device is equivalent to a simpler small-scale switch, which is capable of implementing access between wireless networks, from a wireless network to a wired network, from a wireless network to a wide area network. Typically the device enables a wireless client to access the network, for example, wireless network adapter-based access and the like. When the router works in this mode, no DHCP server is configured and thus the IP address assigning service is not provided. The IP address of the wireless client needs to be provided by an uplink DHCP server of the router or an intranet DHCP server. In the Netfilter architecture, some detection points (HOOKs) are provided at several positions in the entire network flowchart of the Linux kernel, and some processing functions are registered at each detection point for relevant processing (for example, packet filtering, network address translation and the like, or even a user-defined function).

The IP layer has the following five HOOK points:
NF_IP_PRE_ROUTING: The data packet entering the network layer passes through this point, and destination address translation is performed at this point.
NF_IP_LOCAL_IN: Upon routing lookup, the data packet to be sent to a local machine passes through this detection point, and INPUT packet filtration is performed at this point.
NF_IP_FORWARD: The packet to be forwarded passes through this point, and FORWARD packet filtration is performed at this point.
NF_IP_POST_ROUTING: All the packets to be immediately sent out via the network device pass through this detection point, and in-built source address translation function is implemented at this point.
NF_IP_LOCAL_OUT: The packet sent by the process of the local machine passes through this point, and OUTPUT packet filtration is performed at this point.

The conventional router works in a routing mode. In this case, the DHCP server is integrated in the router system, and is capable of directly parsing out a terminal keyword from a DHCP request or Discover packet received from the terminal according to the Option 12 or Option 60 field and then sending the terminal keyword to the cloud server for processing. Using this method, when the router works in the routing mode, it is simple to acquire terminal type information that is desired. However, this method has several defects. First, when the router works in a bridge networking mode, the router itself does not provide the DHCP server function, but only forwards the DHCP packet for the terminal. Therefore, the terminal type information may not be acquired via the DHCP server. Second, the information provided by the Option 12 or Option 60 field does not satisfy the standards of the terminal type that is desired, and the field only indicates the vendor and the terminal model. Some vendors generally do not set the Option 60 field or do not correctly set this field (for example, with respect to a mobile phone, some small vendors may only set the vendor name without mobile phone model). The Option 12 field is informative for most original terminals. However, when the user modifies terminal naming information (for example, the user may define any name as the terminal name, for example, the default naming information of an Android mobile phone is Andorid-45342323 but the user may define 564354 as the naming information of the mobile phone). As such, it is hard to identify the type of the terminal. In addition, in the current solutions, the terminal type information may be queried in the cloud-end server, and when the router is disconnected from the Internet, the terminal type may not be acquired.

### SUMMARY

In view of the above defects in the prior art, the present invention is intended to provide a wireless terminal type identification method and system in a router bridge networking mode, to solve the problem that a conventional router fails to acquire the terminal type by using a DHCP server in the router bridge networking mode, the accuracy of terminal type identification is low and the terminal type fails to be known in the case of Internet interruption.

To achieve the above objective and other relevant objectives, one aspect of the present invention provides a wireless terminal type identification method in a router bridge networking mode. The method includes: in the router bridge networking mode, capturing all communication data packets forwarded by a router and filtering all the communication data packets to obtain a DHCP request data packet between a wireless terminal and a DHCP server; parsing the DHCP request data packet to obtain a parsed value; and sending the obtained parsed value and a MAC address of the wireless terminal to a cloud-end server for a wireless terminal type query to obtain the type of the wireless terminal.

Preferably, the filtering all the communication data packets includes:
judging whether the communication data packets are from a local area network, if the communication data packets are from the local area network, continuing the judgment, and otherwise, releasing the communication data packets;
judging whether a source IP address in the communication data packets is 0.0.0.0 and a destination IP address in the communication data packets is 255.255.255.255, if the source IP address is 0.0.0.0 and the destination IP address is 255.255.255.255, continuing the judgment, and releasing the communication data packets if the source IP address is not 0.0.0.0 or the destination IP address is not 255.255.255.255;
judging whether the communication data packets are user data packets, if the communication data packets are user data packets, continuing the judgment, and otherwise, releasing the communication data packet;
judging whether a source port number of the communication data packets is 68 and a destination port number of the communication data packets is 67, if the source port number is 68 and the destination port number is 67, continuing the judgment, and releasing the communication data packets if the source port number is not 68 or the destination port number is not 67; and
judging whether an information type field in the communication data packets indicates a request data packet, if the information type field indicates a request data packet, obtaining the DHCP request data packet, and otherwise, releasing the communication data packet.

Preferably, the parsing the DHCP request data packet to obtain a parsed value includes:
parsing a hostname field, an additional request parameter field and a vendor identifier field in the DHCP request data packet to obtain a hostname field value, an additional request parameter field value and a vendor identifier field value.

Preferably, the hostname field value, the additional request parameter field value and the vendor identifier field value obtained via parsing, as well as the MAC address of the wireless terminal are sent to a user mode, such that the user mode transmits the hostname field value, the additional request parameter field value, the vendor identifier field value and the MAC address of the wireless terminal to the cloud-end server via wireless communication.

Preferably, the method further includes:
performing a wireless terminal type query in a local database of the router based on the obtained parsed values and the MAC address of the wireless terminal to obtain a local query result;
reporting the local query result to the cloud-end server; and
comparing, by the cloud-end server, the local query result with a cloud-end query result, if the results are consistent, sending, by the cloud-end server, a comparison result to the router, and if the results are inconsistent, sending, by the cloud-end server, the cloud-end query result to the router to replace the local query result to update the local database.

Another aspect of the present invention further provides a wireless terminal type identification system in a router bridge networking mode. The system includes:
a data filtering unit connected to a router, configured to, in the router bridge networking mode, capture all communication data packets forwarded by a router and filtering all the communication data packets to obtain a DHCP request data packet of the communication between a wireless terminal and a DHCP server;
a data parsing unit connected to the data filtering unit, configured to parse the DHCP request data packet obtained via filtering by the data filtering unit to obtain a parsed value; and
a wireless communication unit connected to the data parsing unit, configured to send the obtained parsed value and a MAC address of the wireless terminal to a cloud-end server, so that the wireless terminal type query is performed by the cloud-end server to obtain the wireless terminal type.

Preferably, the data filtering unit includes a source judging module, an address judging module, a user packet judging module, a port number judging module, and an information type judging module; wherein
the source identifying module is connected to a kernel of the router, and is configured to acquire all communication data packets forwarded by the kernel and identify whether each communication data packet is from a wireless local area network, if the communication data packet is from the local area network, continue to identify, and otherwise, release the communication data packets;
the address judging module is connected to the source judging module, and is configured to judge whether a source IP address in the communication data packets sent by the source judging module is 0.0.0.0, and a destination IP address in the communication data packets sent by the source judging module is 255.255.255.255, if the source IP address is 0.0.0.0 and the destination IP address is 255.255.255.255, send the communication data packets to the user packet judging module, and release the communication data packets if the source IP address is not 0.0.0.0 or the destination IP address is not 255.255.255.255;
the user packet judging module is connected to the address judging module, and is configured to judge whether the communication data packets sent by the address judging module are user data packets, if the communication data packets are user data packets, send the communication data packets to the port number judging module, and otherwise, release the communication data packets; the port number judging module is connected to the user packet judging module, and is configured to identify whether a source port number of the communication data packets sent by the user packet judging module is 68 and a destination port number of the communication data packets is 67, if the source port number is 68 and the destination port number is 67, send the communication data packets to the information type judging module, and release the communication data packets if the source port number is not 68 or the destination port number is not 67; and
the information type judging module is connected to the port number judging module, and is configured to judge whether an information type field in the communication data packets sent by the port number judging module indicates a request data packet, if the information type field indicates a request data packet, obtain the DHCP request data packet, and otherwise, release the communication data packet.

Preferably, the data parsing unit includes a hostname parsing module, a request parameter parsing module and a manufacturer parsing module; wherein
the hostname parsing module is configured to parse a hostname field in the DHCP request data packet to obtain a corresponding hostname field value;
the request parameter parsing module is configured to parse an additional request parameter field in the DHCP request data packet to obtain a corresponding additional request parameter field value; and
the manufacturer parsing module is configured to parse a vendor identifier field in the DHCP request data packet to obtain a corresponding vendor identifier field value.

Preferably, the system further includes a user mode unit connected to the data parsing unit and the wireless communication unit; wherein the user mode unit is configured to receive the hostname field value, the additional request parameter field value and the vendor identifier field value parsed by the data parsing module, obtain the MAC address of the wireless terminal, and send the received hostname field value, additional request parameter field value, vendor identifier field value and MAC address of the wireless terminal to the wireless communication unit.

Preferably, the system further includes a local database and a querying unit configured in the router; wherein the querying unit is connected to the local database, the data parsing unit and the wireless communication unit, and the querying unit is configured to perform the wireless terminal type query on the obtained parsed values and the MAC address of the wireless terminal in a local database of the router to obtain a local query result,, and send the local query result to the cloud-end server via the wireless communication unit; wherein the querying unit performs corresponding processing according to a feedback result from the cloud-end server, and if the query result from the cloud-end server is inconsistent with the local query result, the querying unit replaces the local query result with the cloud-end query result to update the local database.

As described above, the wireless terminal type identification method and system in a router bridge networking mode according to the present invention have the following beneficial effects:
With the wireless terminal type identification system and method in a router bridge networking mode according to the present invention, when a router works in the bridge networking mode, when a wireless terminal such as an Android mobile phone, an iPhone and the like is connected to the router, the router is capable of parsing useful information from a DHCP packet communicating between the wireless terminal and a DHCP server, querying in a local database of the router and a database of a cloud-end server, and respectively updating the corresponding device type according to the query results, thereby judging whether the device type of the mobile phone is an Android mobile phone, an iPhone or the like terminal. The present invention ensures that the local database is constantly updated, which thereby improves accuracy of terminal type identification. With the increase of data items in the database, accuracy of automatic type identification may be constantly improved. When being disconnected from the Internet, the router is capable of identifying the type of the terminal by querying the local database, which solves the problem that the terminal type may not be acknowledged in case of network interruption.

### BRIEF DESCRIPTION OF THE DRAWINGS

FIG. 1 is a structural block diagram of a wireless terminal type identification system in a router bridge networking mode according to the present invention;
FIG. 2 is a flowchart of a wireless terminal type identification method in a router bridge networking mode according to the present invention;
FIG. 3 is a flowchart of kernel data filtering in the wireless terminal type identification method in a router bridge networking mode according to the present invention; and
FIG. 4 is a flowchart of wireless terminal type identification, query and comparison in the wireless terminal type identification method in a router bridge networking mode according to the present invention.

### Reference numerals and denotations thereof:

- 11: Data filtering unit
- 12: Data parsing unit
- 13: Wireless communication unit
- 14: Local database
- 15: Querying unit
- 16: Cloud-end server
- S21-S23: Steps
- S301-S314: Steps
- S401-S410: Steps

### DETAILED DESCRIPTION

The embodiments of the present invention are described hereinafter with reference to specific examples. A person skilled in the art would readily understand and know the other advantages and technical effects of the present invention based on the content disclosed in the specification of the present invention. The present invention may also be implemented or applied with reference to other different specific embodiments. Various details in the specification may also be based on different viewpoints and applications, and various modifications or variations may be made without departing from the spirit of the present invention. It should be noted that in cases of no conflict, the embodiments and features in the embodiments of the present invention may be combined together.

It should be noted that the drawings in the embodiments are merely intended to illustratively explain the basic concept of the present invention, and the drawings only illustrate components relevant to the present invention and are not drawn according to the quantity of components, the shapes and dimensions thereof in practice. The shape, quantity and scale of the components in practical implementation may be randomly altered, and the deployment of the components may be even more complicated.

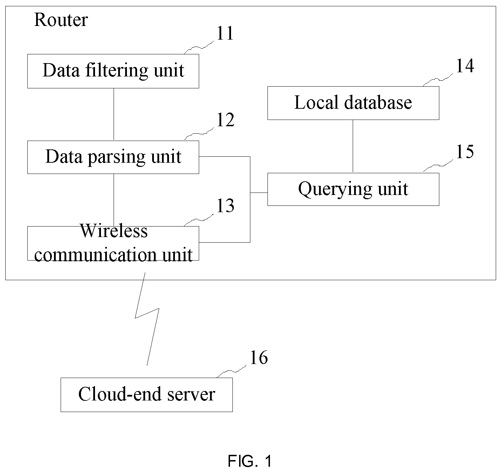

Referring to FIG. 1, the present invention provides a wireless terminal type identification system and method in a router bridge networking mode, which are applied in wireless terminal type identification, that is, performing type matching for terminals (for example, mobile phones, laptop computers, tablet computers and desktop computers having the WiFi function) accessing the router. In this case if the router works in the router bridge networking mode, when the Android mobile phone, the iPhone and the like wireless terminals are connected to the router, the router is capable of parsing useful information from a DHCP packet communicating between the wireless terminal and a DHCP server, querying in a local database of the router and a database of a cloud-end server, and respectively updating the corresponding device type according to the query results, thereby judging whether the device type of the mobile phone is an Android mobile phone, an iPhone or the like terminal. The wireless terminal type identification system and method in a router bridge networking mode according to the present invention are described hereinafter with reference to the accompanying drawings.

As illustrated in FIG. 1, the wireless terminal type identification system in a router bridge networking mode according to the present invention includes a data filtering unit 11, a data parsing unit 12, a wireless communication unit 13, a local database 14, a querying unit 15, and a cloud-end server. The data filtering unit 11 is connected to a router, the data parsing unit 12 is connected to the data filtering unit 11, the wireless communication unit 13 is connected to the data parsing unit 12, the wireless communication unit 13 is connected via wireless communication to the cloud-end server 16, the querying unit 15 is connected to the data parsing unit 12, the wireless communication unit 13 and the querying unit 15.

The data filtering unit 11 is configured to, in the router bridge networking mode, capture all communication data packets forwarded by a router and filter all the communication data packets to obtain a DHCP request data packet communication between a wireless terminal and a DHCP server. The data filtering unit 11 includes a source judging module, an address judging module, a user packet judging module, a port number judging module, and an information type judging module.

The source judging module is connected to a kernel of the router, and is configured to acquire all communication data packets forwarded by the kernel and judge whether the communication data packets are from a wireless local area network, if the communication data packets are from the local area network, continue the judgment, and otherwise, release the communication data packets. The address judging module is connected to the source judging module, and is configured to judge whether a source IP address in the communication data packets sent by the source judging module is 0.0.0.0, and a destination IP address in the communication data packets sent by the source judging module is 255.255.255.255, if the source IP address is 0.0.0.0 and the destination IP address is 255.255.255.255, send the communication data packets to the user packet judging module, and release the communication data packets if the source IP address is not 0.0.0.0 or the destination IP address is not 255.255.255.255. The user packet judging module is connected to the address judging module, and is configured to judge whether the communication data packets sent by the address identifying module are user data packets, if the communication data packets are user data packets, send the communication data packets to the port number judging module, and otherwise, release the communication data packets. The port number judging module is connected to the user packet judging module, and is configured to judge whether a source port number of the communication data packets sent by the user packet judging module is 68 and a destination port number of the communication data packets is 67, if the source port number is 68 and the destination port number is 67, send the communication data packets to the information type judging module, and release the communication data packets if the source port number is not 68 or the destination port number is not 67. The information type judging module is connected to the port number judging module, and is configured to judge whether an information type field in the communication data packets sent by the port number judging module indicates a request data packet, if the information type field indicates a request data packet, obtain the DHCP request data packet, and otherwise, release the communication data packet.

The data parsing unit 12 is configured to parse the DHCP request data packet obtained via filtering by the data filtering unit 11 to obtain corresponding parsed values. The data parsing unit 12 includes a hostname parsing module, a request parameter parsing module and a manufacturer parsing module. The hostname parsing module is configured to parse a hostname field (Option 12) in the DHCP request data packet to obtain a corresponding hostname field value. The request parameter parsing module is configured to parse an additional request parameter field (Option 55) in the DHCP request data packet to obtain a corresponding additional request parameter field value. The manufacturer parsing module is configured to parse a vendor identifier field (Option 60) in the DHCP request data packet to obtain a corresponding vendor identifier field value. The wireless communication unit 13 is configured to send the obtained parsed values and the MAC address of the wireless terminal to the cloud-end server 16, so that the wireless terminal type query is performed by the cloud-end server 16 to obtain the wireless terminal type. Preferably, the system further includes a user mode unit connected to the data parsing unit 12 and the wireless communication unit 13. The user mode unit is configured to receive the hostname field value, the additional request parameter field value and the vendor identifier field value parsed by the data parsing module, acquire the MAC address of the wireless terminal, and send the received hostname field value, additional request parameter field value, vendor identifier field value and MAC address of the wireless terminal to the wireless communication unit 13. The wireless communication unit 13 transmits the information to the cloud-end server 16.

The querying unit 15 is configured to perform the wireless terminal type query on the obtained parsed values and the MAC address of the wireless terminal in a local database 14 of the router to obtain a local query result, and send the local query result to the cloud-end server 16 via the wireless communication unit 13. The querying unit 15 performs corresponding processing according to a feedback result from the cloud-end server 16, and if the query result from the cloud-end server 16 is inconsistent with the local query result, the querying unit replaces the local query result with the cloud-end query result to update the local database.

The present invention involves parsing a DCHP packet in a bridge networking mode. First, a DHCP request packet needs to be captured. In the present invention, the router uses the embedded Linux system as the software system. To parse a data packet, a kernel HOOK function (which is also referred to as a HOOK function) needs to be registered in a Linux kernel mode-related module. According to the present invention, packet filtration is performed based on the Netfilter of the kernel of the Linux system, the HOOK function is registered to the NF_IP_FORWARD point, and in this way the DHCP packet may be parsed out from the HOOK function parameters. Since the data packets captured by the HOOK function are all the data packets forwarded by the kernel, undesired data packets need to be firstly filtered out. When the HOOK function is registered, a DHCP packet filtering KO module, that is, a data filtering unit may be generated. When the system is powered on, this module is loaded, and the data packet forwarded by the router may be captured from the parameters of the HOOK function.

The working principles of the data filtering unit 11 are as follows: When parsing a data packet, since the identification system according to the present invention is only directed to a wireless terminal, the system firstly judges whether the data packet is from a wired LAN side or a wireless LAN side, and if the data packet is from the wired LAN side, the processing of the data packet is terminated and the data packet is released, otherwise, the judgment is continued. Upon the above judgment, the data packet is continuously parsed to obtain a source IP address of the data packet. If the source IP address of the data packet is not 0.0.0.0 and a destination IP address of the data packet is not 255.255.255.255 (a broadcast address), the data packet is released and processing of the data packet is terminated because the source IP address of the DHCP request packet (the DHCP request data packet) is definitely 0.0.0.0 and the destination IP address of the DHCP request packet is definitely 255.255.255.255. Upon the judgment, the data packet is continuously parsed. Since the DHCP protocol is based on the UDP protocol, if the data packet is a TCP packet, the data packet is directly released. The term "release" means that the data packet is allowed to pass through the router without interruption, and processing of the data packet is not terminated. If the data packet is the UDP packet, the judgement is continued and the data packet is continuously parsed to obtain a source port number and a destination port number. If the source port number is not 68 and the destination port number is not 67, the data packet is directly released and processing of the data packet is terminated because the DHCP data packet is a packet that is sent by the DHCP client, i.e., a wireless terminal, to the DHCP server, and according to the DHCP protocol, the source port number is definitely 68 and the destination port number is definitely 67. Upon the judgment, the data packet is continuously parsed. The Option 53 field is parsed to judge whether the value of this field is 3 (a request packet). If the value of the field is not 3, the data packet is directly released and processing of the data packet is terminated. If the value of the field is 3, the DHCP request data packet is acquired. Through the above steps, most data packets that are useless for terminal type identification are filtered. Such processing is advantageous in improving operation efficiency of the router system, because processing of the data packets occupies some system resources. Upon the processing, the DHCP request packet is retained, and the Option 12, Option 55 and Option 60 fields of this packet are directly parsed to acquire corresponding values. Afterwards, the values of the three fields, as well as the MAC address of the terminal, are sent to the user mode by using the Netlink technology, then the data packet is released (the data packet is released when the information of the data packet is read, and otherwise, the DHCP communication fails), and finally the user mode sends the values of the three fields and the corresponding MAC address to the cloud end via the Internet (in addition to the values of the three fields, the MAC address of the terminal may also be carried for terminal identification).

The working principles of the cloud-end server 16 and the querying unit 15 are as follows: The specific terminal type query may be performed by the sequence of Option 60, Option 12 and Option 55. Option 60 indicates a vendor identifier, and generally a vendor name may be provided and sometimes product models are also provided. Option 12 indicates a hostname, and generally a product type and a series number may be provided. Option 55 generally indicates some requested additional parameters, and a sequence of the requested parameters and the number of subfields are different with respect to various vendors and terminals. For example, one query method is as follows: if the option 60 field of mobile phones of a vendor is "****_phone", this field indicates that the terminal is a mobile phone; and if the Option 12 field of Android mobile phones of the vendor is "android-9dc35f25f1ged653", these two fields indicate that the terminal is an Android mobile phone. A further comparison with the Option 55 field achieves over accuracy of over 90%. Since Option 12 may be modified in the terminal, when the terminal type may not be determined based on Option 12, a further determination may be made based on the Option 55 field. Many other query algorithms may also be used, which are not limited to the above methods.

In one aspect, the cloud-end database 16 queries the terminal type of the terminal, stores the query result, and compares the query result with the local query result of the router. In another aspect, the terminal type is queried in the user mode local database, reports the queried terminal type to the cloud-end for comparing with the cloud-end query result. If the locally queried terminal type is inconsistent with the terminal type queried from the cloud end, the cloud end sends the cloud-end query result to the router to replace the terminal type of the wireless terminal queried by the router locally. As such, the local database is updated, and it may be ensured the locally displayed terminal type is correct. When the router is disconnected from the Internet, a new wireless terminal accesses the router, and thus the router may also query the corresponding terminal type locally. Through accumulation for a specific time, the local database may be kept consistent with the cloud-end database.

The wireless terminal type identification system in a router bridge networking mode according to the present invention has the following beneficial effects:
In the bridge networking mode, the parameter values of the Option 12 (hostname field), Option 55 (additional request parameter) and Option 60 (vendor identifier) fields in the DHCP request data packet are parsed by capturing a communication packet between the wireless terminal and the DHCP server (the DHCP discover packet is not selected because when the wireless terminal firstly obtains an assigned IP address through the discover and request steps, between the time when the lease time of the IP address expires and the time when the user is disconnected from the wireless network and is reconnected to the network, when the user acquires the IP address, the request step is involved instead of the discover step), and the parameter values are then reported to the cloud-end server for query.

While the parameters are sent to the cloud end for query, the query is made also in the local database of the router, the query priority is determined by adjusting the sequence of the three fields, the terminal type of the terminal is automatically queried in a cloud-end terminal type database, and meanwhile after the terminal type is queried in the local database, the terminal type is reported to the cloud end for comparison. If the local query result is inconsistent with the cloud-end query result, the cloud-end query result is sent to the router (the cloud-end database contains more data, and therefore the accuracy is higher), and meanwhile the local database is updated (the local query result is replaced). As such, the local database is continuously updated, and thus the accuracy of terminal type identification is improved. If the cloud-end database contains enough data, the accuracy of terminal type identification may be greatly improved. In addition, terminal type data may be manually added to the cloud-end database. In this way, with the increase of the data items in the database, the accuracy of automatic terminal type identification may be constantly improved.

When the router is disconnected from the Internet, a new wireless terminal accesses the router, and the router may also identify the type of the terminal by querying the local database.

A wireless terminal type identification method in a router bridge networking mode according to the present invention is described hereinafter.

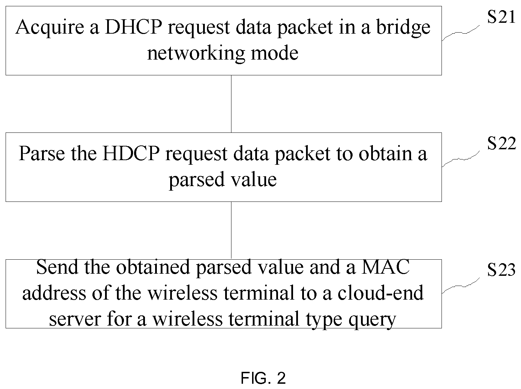

As illustrated in FIG. 2, the wireless terminal type identification method in a router bridge networking mode according to the present invention includes the following steps:
Step S21: In the router bridge networking mode, a DHCP request data packet is received. Specifically, all communication data packets forwarded by a router are captured and then filtered to obtain a DHCP request data packet of the communication between a wireless terminal and a DHCP server. Then step S22 is performed.
Step S22: The DHCP request data packet is parsed to obtain a parsed value. Then step S23 is performed.
Step S23: The obtained parsed value and a MAC address of the wireless terminal are sent to a cloud-end server for a wireless terminal type query to obtain the type of the wireless terminal.

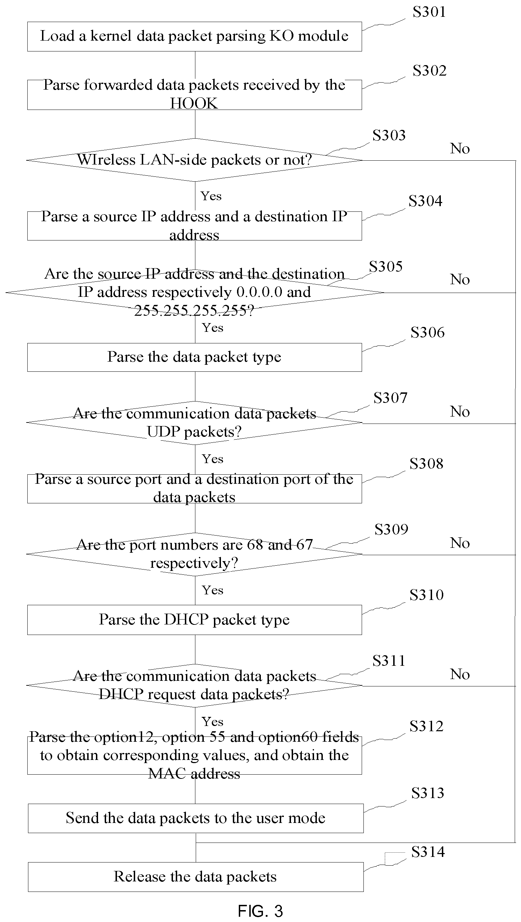

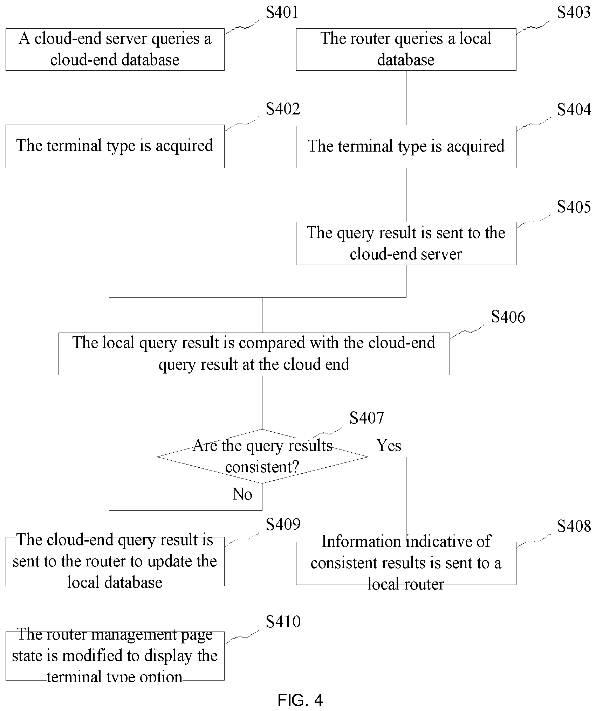

As illustrated in FIG. 3, the process of filtering and processing the data packets by the kernel is as follows:
Step S301: A kernel data packet parsing KO module is loaded to start a data filtering unit, wherein the KO module is the data filtering unit. Then step S302 is performed.
Step S302: Forwarded data packets received by the HOOK function are parsed. Since the data packets captured by the HOOK function are all the data packets forwarded by the kernel, undesired data packets need to be filtered. Then step S303 is performed.
Step S303: Whether the data packets are wireless LAN-side packets is judged. Since wireless terminal type identification is performed only for the wireless LAN side, wired LAN-side data packets may be filtered, and whether the communication data packets are from a local area network may be judged. If the communication data packets are from a local area network, the judgment is continued, and then step S304 is performed; and otherwise, step S314 is performed to release the communication data packets.
Step S304: A source IP address and a destination IP address are parsed. Since the source IP address and the destination IP address in the DHCP request data packet are fixed, whether the communication data packets are DCHP request data packets may be judged by parsing the source IP address and the destination IP address in the communication data packets. Then step S305 is performed.
Step S305: Whether the source IP address and the destination IP address are respectively 0.0.0.0 and 255.255.255.255 is judged. Specifically, whether the source IP address in the communication data packets is 0.0.0.0 and whether the destination IP address in the communication data packets is 255.255.255.255 are judged. If the source IP address is 0.0.0.0 and the destination IP address is 255.255.255.255, the judgment is continued, and then step S306 is performed. If the source IP address is not 0.0.0.0 or the destination IP address is not 255.255.255.255, step S314 is performed to release the communication data packets.
Step S306: The data packet type is parsed. The DHCP protocol is based on the UDP protocol. Therefore, the DHCP request data packet is definitely a UDP packet (user data packet). The data packets may be further filtered based on this judgment condition. Then step S307 is performed.
Step S307: Whether the communication data packets are UDP packets is judged. If the communication data packets are UDP packets, the judgment is continued. Then step S308 is performed. If the communication data packets are not UDP packets, step S314 is performed to release the communication data packets.
Step S308: A source port and a target port of the data packets are parsed. Since the source port and the target port in the DHCP request data packet are fixed, whether the communication data packets are DHCP request data packets may be judged according to a source port number and a target port number parsed from the communication data packets. Then step S309 is performed.
Step S309: Whether the source port number and the targetport number of the communication data packets are 68 and 67 respectively is judged. If the source port number is 68 and the target port number is 67, the judgment is continued, and then step S310 is performed. If the source port number is not 68 or the target port number is not 67, step S314 is performed to release the communication data packets.
Step S310: The DHCP packet type is parsed. Specifically, the Option 53 field is parsed, wherein if the Option 53 field value is 3, it indicates that the communication data packets are DHCP request data packet. Then step S311 is performed.
Step S311: Whether the communication data packets are DHCP request data packets is identified. Specifically, whether the information type field in the communication data packets is a DHCP request data packet is judged. If the information type field in the communication data packet is a DHCP request data packet, step 312 is performed to obtain the DHCP request data packet. If the information type field in the communication data packet is not a DHCP request data packet, step S314 is performed to release the communication data packet.
Step S312: The Option 12, Option 55 and Option 60 fields are parsed to obtain corresponding values, and the MAC address is also obtained. Then step S313 and step S314 are performed. If the information in a DHCP request data packet is read, the DHCP request data packet may be released; and otherwise, the DHCP communication fails. A hostname field (Option 12), an additional request parameter field (Option 55) and a vendor identifier field (Option 60) in the DHCP request data packet are parsed to obtain a hostname field value, an additional request parameter field value and a vendor identifier field value.
Step S313: The data packets are sent to the user mode, and the three field values, as well as the MAC address of the wireless terminal, are sent to the user mode. The hostname field value, the additional request parameter field value and the vendor identifier field value obtained via parsing, as well as the MAC address of the wireless terminal are sent to a user mode, such that the user mode transmits the hostname field value, the additional request parameter field value, the vendor identifier field value and the MAC address of the wireless terminal to the cloud-end server via wireless communication.
Step S314: The data packets are released.
   As illustrated in FIG. 4, terminal type query and local database update are described hereinafter.
Step S401: Acloud-end server queries a cloud-end database, and the cloud-end server queries the type of a wireless terminal via the cloud-end database. The specific query may be performed for Option 60, Option 12 and Option 55 in sequence. Option 60 indicates a vendor identifier, and generally a vendor name may be provided and sometimes product models are also provided. Option 12 indicates a hostname, and generally a product type and a series number may be provided. Option 55 generally indicates some requested additional parameters, and a sequence of the requested parameters and the number of subfields are different with respect to various vendors and terminals. For example, one query method is as follows: if the Option 60 field of mobile phones of a vendor is "****_phone", this field indicates that the terminal is a mobile phone; and if the Option 12 field of Android mobile phones of the vendor is "android-9dc35f25f1ged653", these two fields indicate that the terminal is an Android mobile phone. A further comparison with the Option 55 field achieves over accuracy of over 90%. Since Option 12 may be modified in the terminal, when the terminal type may not be determined based on Option 12, a further determination may be made based on the Option 55 field. The query manner is not limited thereto, and instead other algorithms may also be used for querying the terminal type. Then step S402 is performed.
Step S402: After the cloud-end server acquires the terminal type via query, the cloud-end server stores the query result, and waits to compare the query result with a local query result in the router. Then step S406 is performed.
Step S403: The router queries a local database, and queries in a local database of the router based on the obtained parsed values and the MAC address of the wireless terminal to obtain a local query result, wherein the query manner may be the same as the query manner at the cloud end as described above. Then step S404 is performed.
Step S404: The terminal type and the local query result are obtained. Then step S405 is performed.
Step S405: The query result is sent to the cloud-end server. Specifically, the router reports the local query result to the cloud-end server. Then step S406 is performed.
Step S406: The local query result is compared with the cloud-end query result at the cloud end. Specifically, the cloud-end server compares the cloud-end query result with the local query result. Then step S407 is performed.
Step S407: Whether the query results are consistent is judged. Specifically, the cloud-end query result is compared with the local query result to judge whether the results are consistent. If the results are consistent, step S408 is performed; and otherwise, step S409 is performed.
Step S408: Consistent result is sent to a local router to notify the local router that the query result is correct.
Step S409: The cloud-end query result is sent to the router to update the local database. Specifically, the cloud-end server sends the cloud-end query result to the router to replace the local query result to update the local database. This ensures that the terminal type displayed locally is correct. Then step S410 is performed.
Step S410: The router management page state is modified to display the terminal type option.

In conclusion, the wireless terminal type identification system and method in a router bridge networking mode according to the present invention, in the router bridge networking mode, all communication data packets forwarded by a router are captured and then the communication data packets are filtered to obtain a DHCP request data packet, and the DHCP request data packet is parsed to obtain parameter values of fields Option 12, Option 55 and Option 60, which improves accuracy of terminal type identification. In addition, terminal type query is carried out at the cloud end and at a local end simultaneously. When a local query result of the terminal type is incorrect, the local query result is replaced by a cloud-end query result to update a local database, which improves accuracy of terminal type identification at the local end. In this way, when being disconnected from the Internet, the router is capable of identifying the type of the terminal by querying the local database. Therefore, the present invention effectively overcomes various defects in the prior art and has high industrial value.

The above embodiments are merely used for exemplarily illustrate the principles, functions and effects of the present invention, but are not intended to limiting the present invention. Any person skilled in the art would make polishments or modifications to the above embodiments without departing from the spirit and category of the present invention. Therefore, any equivalent polishments or modifications derived a person having common knowledge in the art without departing from the spirit and inventive concept of the present invention shall all be covered within the scope defined by the claims of the present invention.

## Claims

1. A wireless terminal type identification method in a router bridge networking mode, comprising:
in the router bridge networking mode, capturing all communication data packets forwarded by a router and filtering all the communication data packets to obtain a DHCP request data packet of the communication between a wireless terminal and a DHCP server;
parsing the DHCP request data packet to obtain a parsed value; and
sending the obtained parsed value and a MAC address of the wireless terminal to a cloud-end server for a wireless terminal type query to obtain the type of the wireless terminal.

2. The wireless terminal type identification method in a router bridge networking mode according to claim 1, wherein the filtering all the communication data packets comprises:
judging whether the communication data packets are from a local area network, if the communication data packets are from the local area network, continuing the judgment, and otherwise, releasing the communication data packets;
judging whether a source IP address in the communication data packets is 0.0.0.0 and a destination IP address in the communication data packets is 255.255.255.255, if the source IP address is 0.0.0.0 and the destination IP address is 255.255.255.255, continuing the judgment, and releasing the communication data packets if the source IP address is not 0.0.0.0 or the destination IP address is not 255.255.255.255;
judging whether the communication data packets are user data packets, if the communication data packets are user data packets, continuing the judgment, and otherwise, releasing the communication data packets;
judging whether a source port number of the communication data packets is 68 and a destination port number of the communication data packets is 67, if the source port number is 68 and the destination port number is 67, continuing the judgment, and releasing the communication data packets if the source port number is not 68 or the destination port number is not 67; and
judging whether an information type field in the communication data packets indicates a request data packet, if the information type field indicates a request data packet, the obtained communication data packet is the DHCP request data packet, and otherwise, releasing the communication data packet.

3. The wireless terminal type identification method in a router bridge networking mode according to claim 1 or 2, wherein the parsing the DHCP request data packet to obtain a parsed value comprises:
parsing a hostname field, an additional request parameter field and a vendor identifier field in the DHCP request data packet to obtain a hostname field value, an additional request parameter field value and a vendor identifier field value.

4. The wireless terminal type identification method in a router bridge networking mode according to claim 3, wherein the hostname field value, the additional request parameter field value and the vendor identifier field value obtained via parsing, as well as the MAC address of the wireless terminal are sent to a user mode, such that the user mode transmits the hostname field value, the additional request parameter field value, the vendor identifier field value and the MAC address of the wireless terminal to the cloud-end server via wireless communication.

5. The wireless terminal type identification method in a router bridge networking mode according to claim 1, further comprising:
performing the wireless terminal type query on the obtained parsed values and the MAC address of the wireless terminal in a local database of the router to obtain a local query result;
reporting the local query result to the cloud-end server; and
comparing, by the cloud-end server, the local query result with a cloud-end query result, if the results are consistent, sending, by the cloud-end server, a comparison result to the router, and if the results are inconsistent, sending, by the cloud-end server, the cloud-end query result to the router to replace the local query result to update the local database.

6. A wireless terminal type identification system in a router bridge networking mode, comprising:
a data filtering unit connected to a router, configured to, in the router bridge networking mode, capture all communication data packets forwarded by a router and filter all the communication data packets to obtain a DHCP request data packet of the communication between a wireless terminal and a DHCP server; a data parsing unit connected to the data filtering unit, configured to parse the DHCP request data packet obtained via filtering by the data filtering unit to obtain a parsed value; and
a wireless communication unit connected to the data parsing unit, configured to send the obtained parsed value and a MAC address of the wireless terminal to a cloud-end server, so that the wireless terminal type query is performed by the cloud-end server to obtain the wireless terminal type.

7. The wireless terminal type identification system in a router bridge networking mode according to claim 6, wherein the data filtering unit comprises a source judging module, an address judging module, a user packet judging module, a port number judging module, and an information type judging module; wherein
the source judging module is connected to a kernel of the router, and is configured to acquire all communication data packets forwarded by the kernel and judge whether the communication data packets are from a wireless local area network, if the communication data packets are from the local area network, continue the judgment, and otherwise, release the communication data packets;
the address judging module is connected to the source judging module, and is configured to judge whether a source IP address in the communication data packets sent by the source judging module is 0.0.0.0, and a destination IP address in the communication data packets sent by the source judging module is 255.255.255.255, if the source IP address is 0.0.0.0 and the destination IP address is 255.255.255.255, send the communication data packets to the user packet judging module, and release the communication data packets if the source IP address is not 0.0.0.0 or the destination IP address is not 255.255.255.255;
the user packet judging module is connected to the address judging module, and is configured to judge whether the communication data packets sent by the address judging module are user data packets, if the communication data packets are user data packets, send the communication data packets to the port number judging module, and otherwise, release the communication data packets;
the port number judging module is connected to the user packet judging module, and is configured to judge whether a source port number of the communication data packets sent by the user packet judging module is 68, and a destination port number of the communication data packets sent by the user packet judging module is 67, if the source port number is 68 and the destination port number is 67, send the communication data packets to the information type judging module, and release the communication data packets if the source port number is not 68 or the destination port number is not 67; and
the information type judging module is connected to the port number judging module, and is configured to judge whether an information type field in the communication data packets sent by the port number judging module indicates a request data packet, if the information type field indicates a request data packet, the obtained communication data packet is the DHCP request data packet, and otherwise, release the communication data packet.

8. The wireless terminal type identification system in a router bridge networking mode according to claim 6 or 7, wherein the data parsing unit comprises a hostname parsing module, a request parameter parsing module and a manufacturer parsing module; wherein
the hostname parsing module is configured to parse a hostname field in the DHCP request data packet to obtain a corresponding hostname field value;
the request parameter parsing module is configured to parse an additional request parameter field in the DHCP request data packet to obtain a corresponding additional request parameter field value; and
the manufacturer parsing module is configured to parse a vendor identifier field in the DHCP request data packet to obtain a corresponding vendor identifier field value.

9. The wireless terminal type identification system in a router bridge networking mode according to claim 8, further comprising a user mode unit connected to the data parsing unit and the wireless communication unit; wherein the user mode unit is configured to receive the hostname field value, the additional request parameter field value and the vendor identifier field value parsed by the data parsing module, obtain the MAC address of the wireless terminal, and send the received hostname field value, additional request parameter field value, vendor identifier field value and MAC address of the wireless terminal to the wireless communication unit.

10. The wireless terminal type identification system in a router bridge networking mode according to claim 6, further comprising a local database and a querying unit configured in the router; wherein the querying unit is connected to the local database, the data parsing unit and the wireless communication unit, and the querying unit is configured to perform the wireless terminal type query on the obtained parsed values and the MAC address of the wireless terminal in a local database of the router to obtain a local query result, and send the local query result to the cloud-end server via the wireless communication unit; wherein the querying unit performs corresponding processing according to a feedback result from the cloud-end server, and if the query result from the cloud-end server is inconsistent with the local query result, the querying unit replaces the local query result with the cloud-end query result to update the local database.
